# EUROPEAN PATENT SPECIFICATION

(11) **EP 2 019 501 B1**
(45) Date of publication and mention of the grant of the patent: **05.01.2011**
(21) Application number: 07290926.0
(22) Date of filing: 24.07.2007
(51) Int. Cl.: H04J 3/06, H04L 7/04

(54) **Method and device for detecting the begin of burst mode data packages**
Verfahren und Vorrichtung zur Erkennung vom Beginn eines Datenpakets im Burstmodus
Procédé et dispositif pour détecter le démarrage de paquets de données en mode rafale

(43) Date of publication of application: 28.01.2009
(73) Proprietor: Alcatel Lucent, 75008 Paris (FR)
(72) Inventor: Lautenschlaeger, Wolfram, Dr., 74343 Sachsenheim (DE)
(74) Representative: Schmidt, Werner Karl

(56) References cited:
- EP-A- 0 397 142
- EP-A- 0 717 512
- EP-A- 1 542 382
- EP-A1- 0 594 878
- WO-A1-2007/039107
- US-A- 5 058 141
- US-A1- 2002 141 515

## Description

### Background of the invention

The invention relates to a method and unit for detecting starts (Burst detection) of burst mode data packages (Bursty signal) in an input data stream of a receiver for optical burst mode data packages (Burst Mode Receiver).

Optical Burst Mode transmission is a shared medium application in optical networking as used in a high speed passive optical network (PON). Contrarily to conventional continuous optical transmission, the optical channel is occupied only as long as data is available for transmission in case of Optical Burst Mode transmission. In case of idle source the optical transmitter is switched off, the optical channel remains free for use by other transmitters. Most burst mode receiver designs rely on burst detection for receiver control. Alternatives are scheduling, ranging or other higher level timing protocols with strong limitations on the system layout. Burst detection is the limiting factor for sensitivity, timing, and loss probability.

A receiver of the shared optical medium (Optical Burst Mode Receiver) relying on burst detection has to accomplish following tasks for each optical burst individually:
- Burst detection: identification of the rough burst start for control of the following adaptation tasks. Matched filters are the theoretically best solution for burst detection.
- Adaptation of the bit decision level with respect to the actual high and low power levels of the present burst.
- Adaptation of the bit sampling phase to the actual bit phase of the present burst. Both level and phase adaptation require a certain number of training bits at the beginning of a burst.
- Clock domain transition of the data bits from the alternating burst clock domains to a common local clock domain. This includes appropriate bit stuffing during idle periods, meaning time gaps in between two burst mode data packages (burst gaps). From EP 1 542 382 A1 a solution that carries out bit phase adaptation together with bit stuffing and clock domain transition without explicit knowledge of the burst start is known.
- Frame alignment: reproduction of the frame structure of the transmitted data within the bit stream, which is not obvious due to the unknown number of lost training bits at the beginning of the burst.
- De-multiplexing and parallelization of the high speed bit stream for further digital processing.

Burst detection for receiver control should be carried out before the burst is passing the receiver, because of causality. Hence, an analogue and asynchronous solution at line rate is required for the matched filter implementation.

Examples of burst mode receivers are disclosed in EP 0717512 A2 and WO 03/030561 A2. The performance and reliability of an optical burst mode receiver depends solely on the initial burst detection. In known Optical Burst Mode Receivers burst detection is inherently unreliable: It cannot rely on approved statistical properties of the input signal. Scrambling and line coding is applicable to a bit stream but not to the burst flow as a whole. Detection by power level as well as detection by modulation strength are heavily affected by optical amplifier noise. In consequence, burst detection turns out to be the limiting device in known Optical Burst Mode Receivers with regards to timing as well as sensitivity.

In case of EP 1542382 A bit phase adaptation together with bit stuffing and clock domain transition without explicit knowledge of a burst start in an incoming optical data signal is performed.
The incoming optical signal is having burst clock domain data frequencies and time gaps between two burst mode data packages. The incoming signal is transferred into an electronic data stream by an O/E-conversion device. The data stream is completed into a permanent data stream by synchronizing the electronic data stream, by recovering the input data rate and by transferring the data rate of the electronic signal into a data frequency of a local clock domain. Furthermore stuffing bits are introduced into the time gaps.
This method implies similar constraints on the burst format as it is the case when power level adaptation is performed.

In EP 0397142 A a method for parallel frame synchronization is disclosed, wherein a circuit converts an incoming serial bit stream into parallel data words in a SONET environment using digital pattern recognition.

In case of US 5058141 A a method for detecting a synchronization pattern in an optical serial data stream is proposed, wherein the serial data is converted into a parallel format. In case of this method digital pattern recognition is used in the serial data stream to be a basis for the parallelisation task.

### Object of the invention

It is therefore an object of the invention to provide a method for detecting starts of burst mode data packages, which overcomes the problems associated with the related art, in particular which enables Optical Burst Mode Receivers to detect starts of burst mode data packages in a reliable way.

### Short description of the invention

This object is achieved, in accordance with the invention, by a method for detecting starts of burst mode data packages in an input data stream of an Optical Burst Mode Receiver. Each burst mode data package has a burst clock domain data frequency and time gaps in between two burst mode data packages. The inventive method is comprising the steps of:
- transferring the optical signal of the input data stream into an electronic signal data stream by an O/E-conversion device, preferably wherein the amplitude of the electronic signal data stream is equalized by means of AC coupling and clipping, and
- completing a permanent data stream by synchronizing the electronic signal data stream by recovering the input data rate corresponding to the burst clock domain data frequency of a particular burst mode data package and transferring the data rate of the electronic signal data stream into a data frequency of a local clock domain, and introducing stuffing bits into the time gaps in between the burst mode data packages of the electronic signal data stream by data stream completing means.
The said particular burst mode data package is to be understood as one currently received and processed burst mode data package of the input data stream.

According to the invention, after the completion of the permanent data stream a predefined bit string is searched in the permanent data stream and a start of a particular one of the burst mode data packages having the predefined bit string in its burst header is detected by recognizing a digital pattern match of the predefined bit string in the permanent data stream by burst indication means. Furthermore the inventive method is **characterized in that** the completed permanent data stream is parallelized by subdividing the permanent data stream into subsequent data words of a predefined length before the searching of the predefined bit string is performed by de-multiplexing means. Therefore, the searching of the predefined bit string can be performed by a microprocessor having a well known parallel architecture. Preferably, an overlapping search procedure is performed by searching the predefined bit string subsequently in combined successive words. Therefore, it can be assured that the predefined bit string is recognised, even if it is subdivided into two or more successive words by the de-multiplexing means per chance.

In short terms, the inventive method enables Burst Agnostic High Speed Processing in Optical Burst Mode Receivers by digital bit pattern match recognition. According to the inventive method three processes are combined to overcome the limitations of simple burst detection according to the state of the art on the system performance:
1. Best detection sensitivity for a wanted signal in presence of noise can be reached by a so called matched filter, which, in accordance with the invention, is a filter that fits to a fixed and a priori known bit sequence, i.e. the predefined bit string, in a burst header, meaning the first part of the bit sequence of the header. The similar bit sequences can be used for frame alignment as it is well known. Therefore, the limitations of the state of the art that, contrarily to frame alignment, Burst detection is required before any digital processing can be carried out, are overcome. Because, according to the state of the art, a matched filter for burst detection requires an analogue implementation, e.g. by a tabbed delay line, which is complicated, expensive and unreliable at high bit rates.
2. According to the invention, an AC coupled optical receiver together with a limiting amplifier can be used to carry out the power level adaptation of the bursty signals without explicit knowledge of the burst start. There should be some restrictions on the burst format length of training sequence, line coding, burst length and gap length as set forth below should be to lead to particularly reliable performance of the inventive method.
3. Furthermore, bit phase adaptation together with bit stuffing and clock domain transition without explicit knowledge of the burst start is performed. Preferably, this can be done according to the method and input circuit as taught in EP 1 542 382 A1. This method preferably implies similar constraints on the burst format as the said power level adaptation above.

Accordingly, the burst detection can be deferred until the frame alignment task. Preferably, burst detection and frame alignment are combined in one operation. Thus the analogue matched filter according to the state of the art is replaced by a digital bit pattern match with similar detection quality but less implementation effort. Therefore, bit detection can rely on approved statistical properties of the input signal, meaning the input data stream.
According to the inventive method, the high speed processing is made invariant to presence or absence of a burst, i.e. it is made burst agnostic. Thus the burst detection is deferred to the more convenient digital parallel processing at lower bit rates, i.e. a digital bit pattern match is performed instead of using an analogue matched filter.
The inventive method enables stateless high speed processing and can use technology close to ordinary continuously operating clock and data recovery circuits. The latter fact leads to a simple solution for an efficient and reliable product design for Optical Burst Mode Receivers in high speed PONs.

The mentioned optimal burst format, meaning the format of a burst mode data package received by an inventive detecting unit should meet the following restrictions to enable an optimal burst agnostic processing according to the invention:
- minimum gap between consecutive bursts should be more than five times the well known consecutive identical digits length (CID) of the burst payload or 2% of the maximum burst length, whichever is larger. The CID depends on line coding and scrambling which may have been performed on the burst mode data package.
- the training sequence at burst start should be of minimum three times the CID, preferably a "1010" sequence.
- The fixed frame alignment sequence, i.e. the predefined bit string for pattern recognition, should have a length of at least N≥log₂(P) bit, with P being the permitted false burst detection probability, preferably N≥32 for P<10⁻⁹. The frame alignment sequence must not be "all zeros" nor "all ones", and preferably should not be a valid code word of the payload line coding.

A detecting unit according to the invention for detecting starts of burst mode data packages in an input data stream of an Optical Burst Mode Receiver is designed for carrying out the inventive method. The inventive detecting unit is comprising an O/E-conversion device, being designed to transfer the optical signal of the input data stream into an electronic signal data stream, preferably wherein a limiting amplifier is provided being designed to equalize the amplitude of the electronic signal data stream by means of clipping, and data stream completing means, being designed to complete a permanent data stream by synchronizing the electronic signal data stream by recovering the input data rate corresponding to the burst clock domain data frequency of a particular burst mode data package and transferring the data rate of the electronic signal data stream into a data frequency of a local clock domain, and to introduce stuffing bits into the time gaps in between the burst mode data packages of the electronic signal data stream.
According to the invention, burst indication means are provided, being designed to search for a predefined bit string after the completing of the permanent data stream and to detect a start of a particular burst mode data package having the predefined bit string in its burst header by recognising a digital pattern match of the predefined bit string in the permanent data stream.

The detecting unit is **characterised in that** de-multiplexing means are provided, being designed to parallelize the completed permanent data stream by subdividing the permanent data stream into subsequent data words of a predefined length before the searching of the predefined bit string is performed by de-multiplexing means, preferably wherein the burst indication means are being designed to perform an overlapping search procedure by searching the predefined bit string subsequently in combined successive words.

### Preferred variants of the invention

Preferably, a Frame Alignment process is performed by adjusting the data frame structure of the permanent data stream by using the recognising of the digital pattern match as a frame alignment signal, which is leading to the advantage that frame alignment and burst detection can be performed in a single procedure.

In a further highly preferred variant of the inventive method the said completing of the permanent data stream is performed according to the method thought in EP 1 542 382 A1. Therefore, said completing of the permanent data stream is comprising the steps of attaining a write clock frequency out of the input data rate corresponding to the input data frequency of a burst mode data package by inputting the input data stream into a clock recovery phase locked loop, and- writing the data of the burst mode data package into a data buffer using the write clock frequency. For reading out an output data stream from the data buffer, a read clock frequency according to the data frequency of the local clock domain is used, wherein the writing and the reading is carried out according to a first-in-first-out principle. Furthermore, the following steps are performed:
- attaining a filling indicator value out of a filling level of the data buffer and
- controlling the write clock frequency during the time gaps in between the burst mode data packages by influencing the clock recovery phase locked loop according to the filling indicator value in a way that the filling level remains a given value in average.

This preferred embodiment of the inventive method results at least in the following advantages:
- Seamless bit stuffing in a burst mode receiver is made possible.
- Receiver bit rate adaptation to local clock speed without loss or duplication of relevant data bits is made possible.
- The preferred method allows to use a packet format with high channel utilization, resulting in a reduced overhead, which otherwise only can be reached by performing complicated procedures.
- With moderate channel utilization the preferred method can still be implemented as a simplification of common receivers with benefits in robustness and costs.
- The method effects the required preamble length in burst mode at high data rates, e.g. 10 Gbit/s and more.
- A reduction of necessary packet overhead can be made.

Preferably, the input data stream is put into a phase discriminator of the clock recovery phase locked loop and the influencing of the clock recovery phase locked loop is carried out by overlaying a control signal, preferably by applying a voltage, into the clock recovery phase locked loop according to the filling indicator value. In the PLL the two signals, input data stream and e.g. applied voltage according to the filling indicator value, are overlayed, which leads to an implicit controlling of the filling level of the FIFO buffer.

In a very preferred variant of the inventive detecting unit the said data stream completing means are designed according to the input circuit described in EP 1 542 382 A1. According to the invention, the data stream completing means are comprising:
- clock recovery means, comprising a clock recovery phase locked loop and being designed to attain a write clock frequency out of an input data rate corresponding to an input data frequency of burst mode data packages of an input data stream by inputting the input data stream into the clock recovery phase locked loop, and
- data buffer means, being designed to work according to a first-in-first-out principle and having the input data stream at a data input, wherein the data input is designed to run according to the write clock frequency and the data output is designed to run according to a read clock frequency of a read clock of the local clock domain. Furthermore, control loop means are provided, comprising filling indicator means, being designed to attain a filling indicator value out of a filling level of the data buffer means and clock recovery phase locked loop influencing means, being designed to control the write clock frequency by influencing the clock recovery phase locked loop according to the filling indicator value in a way that the filling level remains a given value in average during time gaps between burst mode data packages. The PLL is a fast acquisition PLL, which is burst-mode-enabled.

Accordingly, no explicit packet detection, e.g. a separate decision logic, is required before the data stream completing process is performed, thus timing constraints are avoided, leading to an applicability to highest data rates. A reduction of the complexity of a burst mode data reception system is made possible.

In another preferred embodiment of said data stream completing means, a digital frequency dividing circuit is provided, being designed to attain the write clock frequency by dividing the input data rate in a way that the write clock frequency is having a fixed ratio to the input data rate, preferably that a demultiplexer is provided, being designed to de-multiplex the data of the burst mode data packages, resulting in that data words are written into the data buffer means. Therefore, a lower write and/or read clock frequency can be used. Therefore, the de-multiplexing of the permanent i.e. the completed data stream can be performed at same time during completing the data stream.

The inventive detecting unit is preferably used as a part of an Optical Burst Mode Receiver, which preferably is part of a transmission device, e.g. for the transmission of optical signals.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing and detailed description of the invention

The invention is shown in the drawing.
- Fig. 1: shows a block diagram of an Optical Burst Mode Receiver according to the invention;
- Fig. 2: shows a block diagram of an input circuit for reclocking and bit stuffing, which enables seamless bit stuffing using a feedback device K;
- Fig. 3: shows an illustration of an operating mode during a burst, i.e. when the input data stream consists of a burst mode data packet, of the input circuit shown in fig. 2;
- Fig. 4: shows an illustration of an operating mode during a gap between bursts, i.e. when the input data stream consists of no burst mode data packet, of the input circuit shown in fig. 2.

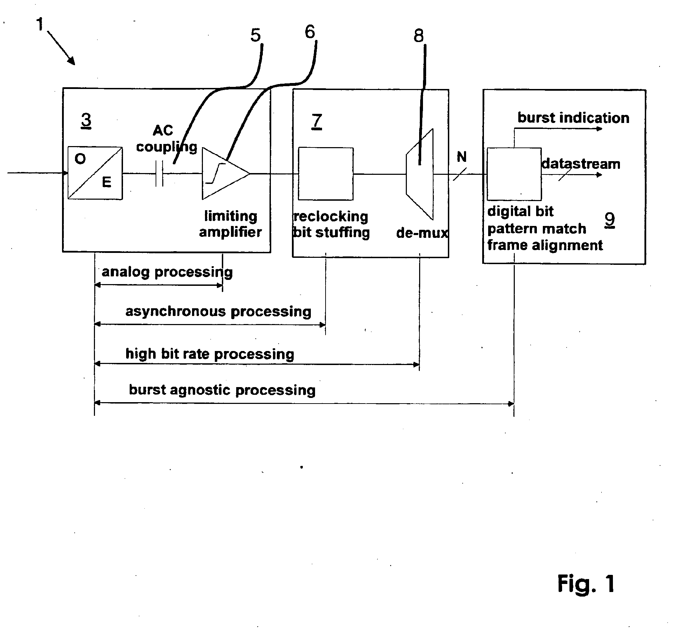

**Fig. 1** illustrates a block diagram of an Optical Burst Mode Receiver according to the invention. The inventive Optical Burst Mode Receiver is comprising a detecting unit 1 for detecting starts of burst mode data packages, having burst clock domain data frequencies and time gaps in between two burst mode data packages, in an input data stream (bursty data stream) of the Optical Burst Mode Receiver. At least some of the the individual bursts have their origin in different transmitters. The detecting unit 1 as shown in the figure is designed to perform a burst agnostic processing according to the inventive method.

The detecting unit is comprising an O/E-conversion device 3, being designed to transfer the optical signal of the input data stream into an electronic signal data stream. A power level adaptation of the electronic signal data stream is performed by an AC coupled optical receiver 5 together with a limiting amplifier 6. The latter power level adaptation by the limiting amplifier 6 leads to an equalization of the amplitude of the electronic signal data stream by means of clipping, represented by the AC coupled optical receiver 5 together with the limiting amplifier 6, meaning that the individual bursts are given equal amplitude. An analogous processing of the burst mode data packages is performed by the O/E-conversion device 3, the AC coupled optical receiver 5 and the limiting amplifier 6.

Furthermore, the detection unit is comprising data stream completing means 7. An asynchronous digital processing leading to reclocking and bit stuffing is performed by the data stream completing means 7. The data stream completing means 7 are designed to complete a permanent data stream by synchronizing the electronic signal data stream by recovering the input data rate corresponding to the burst clock domain data frequency of a particular burst mode data package and transferring the data rate of the electronic signal data stream into a data frequency of a local clock domain of the Optical Burst Mode Receiver. Therefore, the electronic signal data stream is synchronized bit by bit.

Furthermore, the data stream completing means 7 are designed to introduce stuffing bits into the time gaps in between the burst mode data packages of the electronic signal data stream to complete to a permanent data stream.

After being completed, the electronic signal data stream passes de-multiplexing means 8 (de-multiplexer). The de-multiplexer 8 is designed to parallelize the completed permanent data stream by subdividing the permanent data stream into subsequent data words of a predefined length before the searching of the predefined bit string is performed by burst indication means 9 (means of pattern recognition). The parallelisation of the completed permanent data stream is symbolised by the letter N marked at the symbolic data stream in the figure. The said analogous processing and the asynchronous digital data processing and the de-multiplexing is performed as high bit rate processing.

The said burst indication means 9 are designed to search for a predefined bit string after the completon of the permanent data stream and to detect a start of a particular burst mode data package by recognising a digital pattern match of the predefined bit string in the permanent data stream. After a start of a burst is detected by the means of pattern recognition, a burst indication signal is created by the burst indication means 9 to initialize further processing of the burst mode data. The searching for a predefined bit string can be carried out by performing an overlapping search procedure by searching the predefined bit string subsequently in combined successive data words of the parallelized completed permanent data stream.

Furthermore, a Frame alignment process can be performed by the burst indication means 9. Therefore, the recognising of the digital pattern match, meaning the burst indication itself, is used to adjust the data frame structure of the permanent data stream. Therefore, the digital bit pattern match is used for burst detection and frame alignment.

In contrast to ordinary frame alignment, wherein, with the knowledge of the rough burst start position, the frame alignment signal is just the remainder of the end of a training sequence at the beginning of a bursty data stream, which usually is marked by a single bit (e.g. as in Ethernet frames), according to the invention the frame alignment signal is searched anywhere in the bit stream after being completed to the completed permanent data stream.

For optimum performance of the inventive method the burst mode data packages should have the following restrictions and the frame alignment signal, meaning the predefined bit string being searched in the permanent data stream, should be sufficiently long according to the following restrictions:
- the frame alignment signal should be different from the training sequence at the beginning of the burst mode data packages,
- the frame alignment signal should be different from "all zeros" and "all ones" to avoid misinterpretation of input amplifier saturation effects,
- the frame alignment signal should be different from valid payload code words including all protocol headers,
- the word length (N) of the frame alignment signal should be dependent of the permitted false detection probability (P) according to N>log₂(P) to cope with sampled noise during idle operation.

Thus the pattern match can be even deferred after the de-multiplexing, so the matched filter operation for burst detection can be replaced by ordinary digital CMOS processing, e.g. in a Field Programmable Gate Array (FPGA).

As a result, the critical analogue, asynchronous and high bit rate electronic parts of the Optical Burst Mode Receiver remain free of any burst detection decision with its uncertainties, unreliability, and timing constraints. The pattern match in the digital part thereafter, meaning the burst indication means, yields similar detection accuracy as a much more complicated analogue matched filter at receiver input.

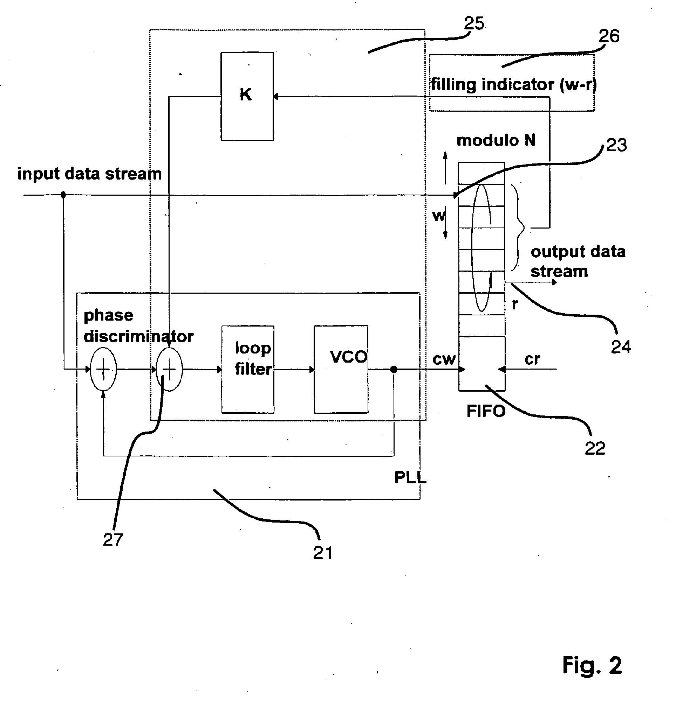

In **Fig. 2** a block diagram of an input circuit for reclocking and bit stuffing preferably used in the inventive Optical Burst Mode Receiver according to Fig. 1 is shown as an example for the said data stream completing means of the inventive detecting unit. This input circuit enables seamless bit stuffing using a feedback device K. The inventive input circuit for a burst mode receiver for carrying out the inventive method according is comprising clock recovery means, comprising a clock recovery phase locked loop (PLL) and being designed to attain a write clock frequency (cw) out of an input data rate corresponding to an input data frequency of burst mode data packages of an input data stream by inputting the input data stream into the clock recovery phase locked loop 21, data buffer means 22 (FIFO buffer), being designed to work according to a first-in-first-out (FIFO) principle and having the input data stream at a data input, wherein the data input 23 is designed to run according to the write clock frequency and the data output 24 is designed to run according to a read clock frequency of a read clock (cr) having the data frequency of the local clock domain, wherein control loop means 25 are provided, comprising filling indicator means 26, being designed to attain a filling indicator value (w-r) out of a filling level of the data buffer means and clock recovery phase locked loop influencing means 27, being designed to control the write clock frequency by influencing the clock recovery phase locked loop according to the filling indicator value in a way that the filling level remains a given value in average during time gaps between burst mode data packages. The filling indicator value w-r is calculated as the distance between a write position (w) and a read position (r) of data of the input data stream being stored in the FIFO buffer.

Two inter-linked control loops for controlling the write clock of the FIFO buffer are used. A first control loop being the clock recovery PLL is controlling the clock recovery of the input data stream, when consisting a burst mode data packet.

In the PLL two signals, an incoming signal and a locally created signal, are compared according to their phase. The result is expressed e.g. as a voltage. For example: if the locally created signal is later than the incoming signal this is expressed in a positive voltage and if the locally created signal is earlier than the incoming signal this is expressed in a negative voltage. This voltage is applied to a voltage controlled oscillator (VCO), which, for example, oscillates with a higher frequency if a positive voltage is applied and oscillates with a lower frequency, if a negative voltage is applied. This can be expressed as a continuously growing phase shift, because the phase is an integral of the frequency over time. The output signal of the VCO is the locally created signal of the phase discriminator, which leads to an implementation of a control loop of the phase shift. The loop filter suppresses distortion signals of the phase discriminator and defines characteristics of the control loop, as e.g. stability and oscillation behavior. According to its character the loop filter is a low pass filter and no band filter, having a resonant frequency. The input data stream is written to a FIFO buffer under control of a recovered clock (cw) by moving the write position (w) from storage cell to storage cell. The position cycles modulo of the FIFO buffer size N. The system clock of a local node (cr) moves the read position cell by cell, where the data is read out from the FIFO buffer. Ideally, the distance between read and write position is w-r = N/2 taken modulo N, what defines the given value which the filling level of the FIFO buffer remains in average during time gaps. If the write clock is faster or slower than the read clock, the distance w-r grows or shrinks with the danger of passing each other in one or the other direction.

The Phase discriminator included in the clock recovery PLL, outputs a statistically changing control value with a mean value of zero during gaps, thus having no influence to the first control loop during gaps, e.g. it is not effective between two burst mode data packages, but dominates the second control loop when effective. The second control loop is controlling the filling of the FIFO buffer without relevant influence when burst mode data packages are received, meaning when the first control loop is actively recovering the input data clock, but having exclusive influence on the write clock frequency during gaps. Both control loops are working on a common voltage controlled oscillator (VCO). Amplitudes and bandwidth of the control signals of the two control loops are harmonized in a way that the second control loop is overruled by the first control loop as long as the input signal is containing a burst mode data package. The second control loop is coinciding in part with the first control loop and is influencing the write clock frequency in such a manner, that the filling level of the FIFO buffer remains a given value in average. The input circuit is based on the idea to insert an additional feedback from the FIFO buffer filling indicator (w-r) to the PLL error signal by means of an appropriate shaping and/or filtering device K, according to figure 2.

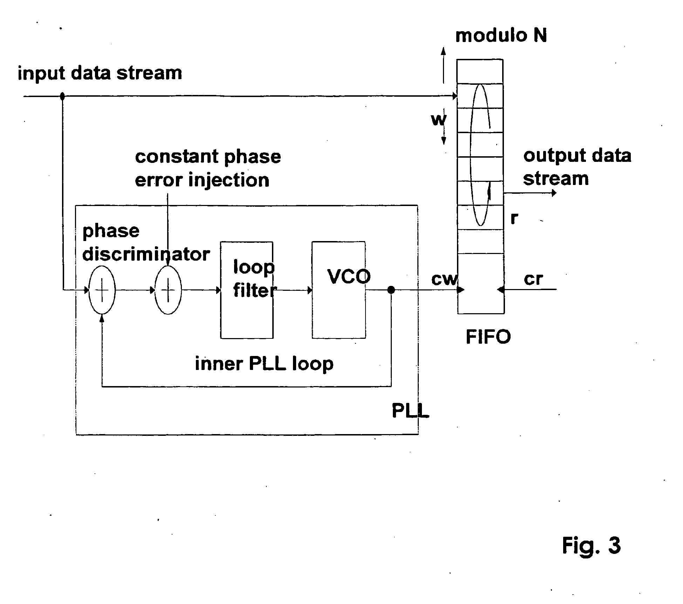

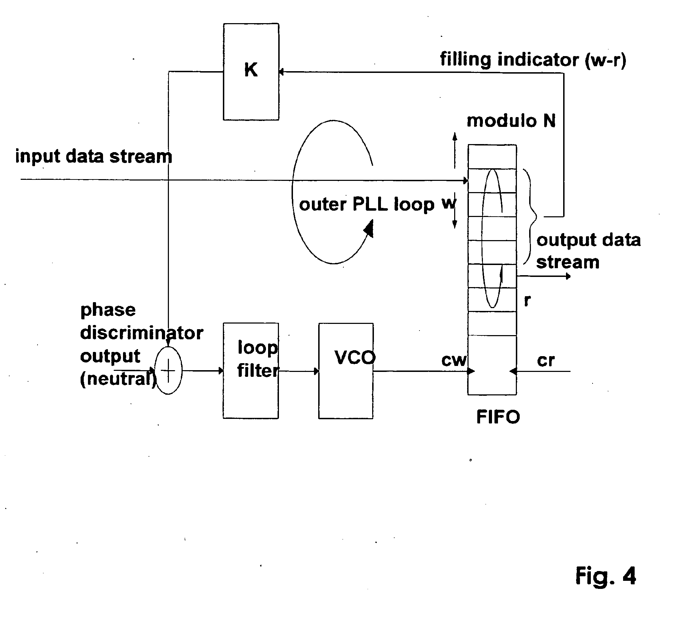

This results in a tandem solution, wherein a clock recovery PLL and a FIFO buffer control PLL are combined, each of them operating only in one mode of two possible modes:
1. mode (data): a data packet is received, as shown in **Fig. 3**, and
2. mode (noise): time gap between two received data packets, as shown in **Fig. 4****.**

The transition between both modes is implicit by correlation features of the input data stream (input signal) depending whether noise or data are received. Alternatively, the additional feedback can be injected into the PLL loop at any point between phase discriminator and VCO.

During the reception of a burst mode data packet both write clock (cw) and read clock (cr) have nearly equal frequencies, the FIFO filling does not change, resulting in that the additional feedback signal is constant, and can be regarded as an independent constant phase error injection, as shown in figure 3. The inner PLL operates as expected with a slightly shifted phase, the FIFO filling has no explicit effect.

In contrary, during a gap, the input signal contains no transitions (zeros level) or uncorrelated transitions (noise). In this case the phase discriminator delivers a phase error signal, which is neutral in average resulting in that the inner PLL control loop is not active anymore, the neutral phase detector signal can be ignored, as shown in figure 4. This results in an outer PLL loop, which is using the FIFO buffer as phase detector. If the FIFO buffer filling is too high, the VCO is slowed down a bit and vice versa, until the filling is back to (w-r) = N/2.

The filtering stage K is, in its simplest form, a sign function followed by a low pass filter. Other digital circuitry can be positioned between PLL and FIFO buffer, as long as the data rate and clock rate at the FIFO write input have a fixed ratio to the VCO frequency. As an example, the data could pass a demultiplexer, where the FIFO would store data words instead of bits at a corresponding lower clock rate.

The outer PLL loop is not required to equalize the FIFO filling in a rapid way. It is a means to keep the filling rate at N/2 during the gap, and not to allow the otherwise free running VCO to diverge far away from this position. This idea allows to dimension K in such a way, that the phase error during the packet remains sufficiently small.

Furthermore, the transition from gap to packet and vice versa is an implicit process not requiring extra control signals or detector devices. This way, it avoids any kind of timing or propagation delay constraints, and thus is applicable to highest transmission speeds.

Both read and write positions are never explicitly stopped or reset. This avoids any problem with false reset signals from packet detection, or duplicated read of old FIFO buffer content.

## Claims

1. Method for detecting starts of burst mode data packages, each having a burst clock domain data frequency and time gaps in between two burst mode data packages, in an input data stream of an Optical Burst Mode Receiver comprising the steps of:
- transferring the optical signal of the input data stream into an electronic signal data stream by an O/E-conversion device (3), preferably wherein the amplitude of the electronic signal data stream is equalized by means of clipping,
- completing a permanent data stream by synchronizing the electronic signal data stream by recovering the input data rate corresponding to the burst clock domain data frequency of a particular burst mode data package and transferring the data rate of the electronic signal data stream into a data frequency of a local clock domain, and introducing stuffing bits into the time gaps in between the burst mode data packages of the electronic signal data stream by data stream completing means (7),
**characterised in that**,
after the completing of the permanent data stream a predefined bit string is searched in the permanent data stream and a start of a particulars of the burst mode data packages, having the predefined bit string in its burst header, is detected by recognising a digital pattern match of the predefined bit string in the permanent data stream by burst indication means (9), wherein the completed permanent data stream is parallelized by subdividing the permanent data stream into subsequent data words of a predefined length before the searching of the predefined bit string is performed by de-multiplexing means (8).

2. The method according to claim 1, **characterised in that**
an overlapping search procedure is performed by searching the predefined bit string subsequently in combined successive words.

3. The method according to claim 1, **characterised in that** a Frame Alignment process is performed by adjusting the data frame structure of the permanent data stream by using the recognising of the digital pattern match as a frame alignment signal.

4. The method according to claim 1, **characterised in that** the completing of the permanent data stream is comprising the steps of
- attaining a write clock frequency out of the input data rate corresponding to the input data frequency of a burst mode data package by inputting the input data stream into a clock recovery phase locked loop (21),
- writing the data of the burst mode data package into a data buffer (22) using the write clock frequency, and
- reading out an output data stream from the data buffer (22) using a read clock frequency according to the data frequency of the local clock domain, wherein the writing and the reading is done according to a first-in-first-out principle,
wherein the following steps are performed:
- attaining a filling indicator value out of a filling level of the data buffer (22) and
- controlling the write clock frequency during the time gaps in between the burst mode data packages by influencing the clock recovery phase locked loop (21) according to the filling indicator value in a way that the filling level remains a given value in average.

5. The method according to claim 4, **characterised in that** the input data stream is put into a phase discriminator of the clock recovery phase locked loop (21) and the influencing of the clock recovery phase locked loop (21) is done by overlaying a control signal, preferably by applying a voltage, into the clock recovery phase locked loop (21) according to the filling indicator value.

6. A detecting unit (1) for detecting starts of burst mode data packages, each having a burst clock domain data frequency and time gaps in between two burst mode data packages, in an input data stream of an Optical Burst Mode Receiver for carrying out the method according to claim 1, comprising
- an O/E-conversion device (3), being designed to transfer the optical signal of the input data stream into an electronic signal data stream, preferably wherein a limiting amplifier (6) is provided being designed to equalize the amplitude of the electronic signal data stream by means of clipping,
- data stream completing means (7), being designed to complete a permanent data stream by synchronizing the electronic signal data stream by recovering the input data rate corresponding to the burst clock domain data frequency of a particular burst mode data package and transferring the data rate of the electronic signal data stream into a data frequency of a local clock domain, and to introduce stuffing bits into the time gaps in between the burst mode data packages of the electronic signal data stream,
wherein burst indication means (9) are provided, being designed to search for a predefined bit string after the completing of the permanent data stream and to detect a start of a particular burst mode data package, having the predefined bit string in its burst header, by recognising a digital pattern match of the predefined bit string in the permanent data stream, wherein de-multiplexing means (8) are provided, being designed to parallelize the completed permanent data stream by subdividing the permanent data stream into subsequent data words of a predefined length before the searching of the predefined bit string is performed by the said burst indication means (9).

7. The detecting unit according to claim 6, **characterised in that** the burst indication means (9) are being designed to perform an overlapping search procedure by searching the predefined bit string subsequently in combined successive words.

8. The detecting unit according to claim 6, wherein the data stream completing means are comprising
- clock recovery means, comprising a clock recovery phase locked loop (21) and being designed to attain a write clock frequency out of the input data rate corresponding to the burst clock domain data frequency of a particular burst mode data package of the input data stream by inputting the input data stream into the clock recovery phase locked loop (21),
- data buffer means (22), being designed to work according to a first-in-first-out principle and having the input data stream at a data input (23), wherein the data input (23) is designed to run according to the write clock frequency and the data output (24) is designed to run according to a read clock frequency of a read clock of the local clock domain,
wherein
control loop means (25) are provided, comprising
- filling indicator means (26), being designed to attain a filling indicator value out of a filling level of the data buffer means and
- clock recovery phase locked loop influencing means (27), being designed to control the write clock frequency by influencing the clock recovery phase locked loop (21) according to the filling indicator value in a way that the filling level remains a given value in average during time gaps between burst mode data packages.

9. The detecting unit according to claim 8, **characterised in that** a digital frequency dividing circuit is provided, being designed to attain the write clock frequency by dividing the input data rate in a way that the write clock frequency is having a fixed ratio to the input data rate, preferably that a demultiplexer (8) is provided, being designed to demultiplex the data of the burst mode data packages, resulting **in that** data words are written into the data buffer means.

10. An Optical Burst Mode Receiver comprising a detecting unit (1) according to claim 6.

## Patentansprüche

1. Verfahren zum Erkennen des Beginns von im Burstmodus übertragenen Datenpaketen, welche jeweils eine Datenfrequenz des Burst-Taktbereichs und Zeitlücken zwischen zwei im Burstmodus übertragenen Datenpaketen aufweisen, in einem Eingangsdatenstrom eines optischen Burstmodus-Empfängers, wobei das Verfahren die folgenden Schritte umfasst:
- Transferieren des optischen Signals des Eingangsdatenstroms in einen elektronischen Signaldatenstrom anhand einer O/E-Umsetzungsvorrichtung (3), wobei die Amplitude des elektronischen Signaldatenstroms vorzugsweise durch Spitzenbegrenzung begrenzt wird,
- Vervollständigen eines permanenten Datenstroms durch Synchronisieren des elektronischen Signaldatenstroms durch Rückgewinnung der der Datenfrequenz des Burst-Taktbereichs eines bestimmten im Burstmodus übertragenen Datenpakets entsprechenden Eingangsdatenrate und Transferieren der Datenrate des elektronischen Signaldatenstroms in eine Datenfrequenz eines lokalen Taktbereichs, und Einfügen von Stopfbits in die Zeitlücken zwischen die im Burstmodus übertragenen Datenpakete des elektronischen Signaldatenstroms anhand von Datenstromvervollständigungsmitteln (7), **dadurch gekennzeichnet, dass**
nach dem Vervollständigen des permanenten Datenstroms eine vordefinierte Bit-Zeichenkette in dem permanenten Datenstrom gesucht wird, und ein Beginn eines bestimmten der im Burstmodus übertragenen Datenpakete, welches die vordefinierte Bit-Zeichenkette in seinem Burst-Kopfteil aufweist, durch das Erkennen einer Übereinstimmung des digitalen Musters der vordefinierten Bit-Zeichenkette in dem permanenten Datenstrom durch Burstanzeigemittel (9) erfasst wird,
wobei der vervollständigte permanente Datenstrom durch Aufteilen des permanenten Datenstroms in nachfolgende Datenwörter einer vordefinierten Länge parallelisiert wird, bevor die Suche der vordefinierten Bit-Zeichenkette anhand der Demultiplexmittel (8) durchgeführt wird.

2. Das Verfahren nach Anspruch 1, **dadurch gekennzeichnet, dass** eine überlappende Suchprozedur durch Suchen der vordefinierten Bit-Zeichenkette nachträglich in kombinierten aufeinanderfolgenden Wörtern durchgeführt wird.

3. Das Verfahren nach Anspruch 1, **dadurch gekennzeichnet, dass** ein Rahmenausrichtungsprozess durch Anpassen der Datenrahmenstruktur des permanenten Datenstroms unter Verwendung der Erkennung der Übereinstimmung des digitalen Musters als ein Rahmenausrichtungssignal durchgeführt wird.

4. Das Verfahren nach Anspruch 1, **dadurch gekennzeichnet, dass** das Vervollständigen des permanenten Datenstroms die folgenden Schritte umfasst:
- Erhalten einer Schreibtaktfrequenz aus der Eingangsdatenrate, welche der Eingangsdatenfrequenz eines im Burstmodus übertragenen Datenpakets entspricht, durch Eingeben des Eingangsdatenstroms in eine Taktrückgewinnungs-Phasenregelschleife (21),
- Einschreiben der Daten des im Burstmodus übertragenen Datenpakets in einen Datenpuffer (22) unter Verwendung der Schreibtaktfrequenz, und
- Auslesen eines Ausgangsdatenstroms aus dem Datenpuffer (22) unter Verwendung einer Schreibtaktfrequenz gemäß der Datenfrequenz des lokalen Taktbereichs, wobei das Schreiben und Lesen gemäß einem First-in-First-out-Prinzip erfolgen,
wobei die folgenden Schritte durchgeführt werden:
- Erhalten eines Füllstandsanzeigewertes aus einem Füllstand des Datenpuffers (22), und
- Steuern der Schreibtaktfrequenz während der Zeitlücken zwischen den im Burstmodus übertragenen Datenpaketen durch Beeinflussen der Taktrückgewinnungs-Phasenregelschleife (21) gemäß dem Füllstandsanzeigewert in einer Weise, dass der Füllstand bei einem gegebenen durchschnittlichen Wert verbleibt.

5. Das Verfahren nach Anspruch 4, **dadurch gekennzeichnet, dass** der Eingangsdatenstrom in einen Phasendiskriminator der Taktrückgewinnungs-Phasenregelschleife (21) eingegeben wird und die Beeinflussung der Taktrückgewinnungs-Phasenregelschleife (21) durch Überlagern eines Steuersignals, vorzugsweise durch Anlegen einer Spannung in die Taktrückgewinnungs-Phasenregelschleife (21) gemäß dem Füllstandsanzeigewert, erfolgt.

6. Eine Erkennungseinheit (1) zum Erkennen des Beginns von im Burstmodus übertragenen Datenpaketen, welche jeweils eine Datenfrequenz des Burst-Taktbereichs und Zeitlücken zwischen zwei im Burstmodus übertragenen Datenpaketen aufweisen, in einem Eingangsdatenstrom eines optischen Burstmodus-Empfängers zum Durchführen des Verfahrens gemäß Anspruch 1, umfassend:
- Eine O/E-Umsetzungsvorrichtung (3), welche dazu bestimmt ist, das optische Signal des Eingangsdatenstroms in einen elektronischen Signaldatenstrom zu transferieren, wobei vorzugsweise ein Begrenzungsverstärker (6) bereitgestellt wird, um die Amplitude des elektronischen Signaldatenstroms durch Spitzenbegrenzung zu begrenzen,
- Datenstromvervollständigungsmittel (7), welche dazu bestimmt sind, einen permanenten Datenstrom durch Synchronisieren des elektronischen Signaldatenstroms durch Rückgewinnung der Eingangsdatenrate, welche der Datenfrequenz des Burst-Taktbereichs eines bestimmten im Burstmodus übertragenen Datenpakets entspricht, zu vervollständigen, und die Datenrate des elektronischen Signaldatenstroms in eine Datenfrequenz eines lokalen Taktbereichs zu transferieren, und Einfügen von Stopfbits in die Zeitlücken zwischen den im Burstmodus übertragenen Datenpaketen des elektronischen Signaldatenstroms,
wobei Burstanzeigemittel (9) bereitgestellt werden, welche dazu bestimmt sind, nach der Vervollständigung des permanenten Datenstroms nach einer vordefinierten Bit-Zeichenkette zu suchen und einen Beginn eines bestimmten im Burstmodus übertragenen Datenpakets, welches die vordefinierte Bit-Zeichenkette in seinem Burst-Kopfteil aufweist, durch Erkennen einer Übereinstimmung des digitalen Musters der vordefinierten Bit-Zeichenkette in dem permanenten Datenstrom zu erkennen, wobei Demultiplexmittel (8) bereitgestellt werden, welche dazu bestimmt sind, den vervollständigten permanenten Datenstrom durch Aufteilen des permanenten Datenstroms in nachfolgende Datenwörter einer vordefinierten Länge zu parallelisieren, bevor die Suche des vordefinierten Datenstrangs durch die besagten Burstanzeigemittel (9) durchgeführt wird.

7. Die Erkennungseinheit nach Anspruch 6, **dadurch gekennzeichnet, dass** die Burstanzeigemittel (9) dazu ausgelegt sind, eine Überlappungssuchprozedur durch Suchen der vordefinierten Bit-Zeichenkette nachträglich in kombinierten aufeinanderfolgenden Wörtern durchzuführen.

8. Die Erkennungseinheit nach Anspruch 6, wobei die Datenstromvervollständigungsmittel umfassen:
- Taktrückgewinnungsmittel, welche eine Taktrückgewinnungs-Phasenregelschleife (21) umfassen und dazu ausgelegt sind, eine Schreibtaktfrequenz aus der Eingangsdatenrate, welche der Datenfrequenz des Burst-Taktbereichs eines bestimmten im Burstmodus übertragenen Datenpakets des Eingangsdatenstroms entspricht, durch Eingeben des Eingangsdatenstroms in die Taktrückgewinnungs-Phasenregelschleife (21) zu erhalten,
- Datenpuffermittel (22), welche dazu bestimmt sind, gemäß einem First-in-First-out-Prinzip zu arbeiten und den Eingangsdatenstrom an einem Dateneingang (23) aufweisen, wobei der Dateneingang (23) dazu bestimmt ist, gemäß der Schreibtaktfrequenz zu arbeiten, und der Datenausgang (24) dazu bestimmt ist, gemäß einer Lesetaktfrequenz eines Lesetaktes des lokalen Taktbereichs zu arbeiten,
wobei
Steuerschleifenmittel (25) bereitgestellt werden, welche umfassen
- Füllstandsanzeigemittel (26), die dazu bestimmt sind, einen Füllstandsanzeigewert aus einem Füllstand der Datenpuffermittel zu erhalten, und
- Taktrückgewinnungs-Phasenregelschleifen-Beeinflussungsmittel (27), welche dazu bestimmt sind, die Schreibtaktfrequenz durch Beeinflussung der Taktrückgewinnungs-Phasenregelschleife (21) gemäß dem Füllstandsanzeigewert zu steuern, so dass der Füllstand während der Zeitlücken zwischen im Burstmodus übertragenen Datenpaketen im Durchschnitt ein gegebener Wert bleibt.

9. Die Erkennungseinheit nach Anspruch 8, **dadurch gekennzeichnet, dass** eine digitale Frequenzaufteilungsschaltung bereitgestellt wird, welche dazu bestimmt ist, die Schreibtaktfrequenz durch Aufteilen der Eingangsdatenrate in einer Weise, dass die Schreibtaktfrequenz ein festes Verhältnis zu der Eingangsdatenrate aufweist, zu erhalten, dass vorzugsweise ein Demultiplexer (8) bereitgestellt wird, welcher dazu bestimmt ist, die Daten der im Burstmodus übertragenen Datenpakete zu demultiplexen, wodurch erreicht wird, dass Datenwörter in die Datenpuffermittel eingeschrieben werden.

10. Ein optischer Burstmodus-Empfänger mit einer Erkennungseinheit (1) gemäß Anspruch 6.

## Revendications

1. Procédé de détection des débuts des paquets de données en mode rafale, chacun possédant une fréquence de données dans le domaine temporel de rafale et des intervalles de temps entre deux paquets de données en mode rafale, dans un flux de données d'entrée d'un récepteur en mode rafale optique comprenant les étapes suivantes :
- transfert du signal optique du flux de données d'entrée dans un flux de données de signal électronique par un dispositif de conversion OIE (3), de préférence dans lequel l'amplitude du flux de données de signal électronique est égalisée au moyen d'un écrêtage,
- accomplissement d'un flux de données permanent en synchronisant le flux de données de signal électronique par récupération du débit de données d'entrée correspondant à la fréquence de données dans le domaine temporel de rafale d'un paquet de donnés en mode rafale particulier et transfert du débit de données du flux de données de signal électronique dans une fréquence de données d'un domaine d'horloge local, et introduction de bits de bourrage dans les intervalles de temps entre les paquets de données en mode rafale du flux de données de signal électronique par des moyens d'accomplissement du flux de données (7),
**caractérisé en ce que**
après l'accomplissement du flux de données permanent, une chaîne binaire prédéfinie est recherchée dans le flux de données permanent et un début d'un paquet particulier parmi les paquets de données en mode rafale, dont l'en-tête de rafale contient la chaîne binaire prédéfinie, est détecté en reconnaissant une concordance de modèle numérique de la chaîne binaire prédéfinie dans le flux de données permanent par des moyens d'indication de rafale (9), le flux de données permanent accompli étant mis en parallèle en subdivisant le flux de données permanent en mots de données postérieurs ayant une longueur prédéfinie avant que la recherche de la chaîne binaire prédéfinie ne soit effectuée par des moyens de démultiplexage (8).

2. Procédé selon la revendication 1, **caractérisé en ce qu'**une procédure de recherche de superposition est réalisée en recherchant la chaîne binaire prédéfinie postérieurement dans des mots successifs combinés.

3. Procédé selon la revendication 1, **caractérisé en ce qu'**un processus d'alignement de trame est réalisé en ajustant la structure de trame de données du flux de données permanent en utilisant la reconnaissance de la concordance du modèle numérique comme un signal d'alignement de trame.

4. Procédé selon la revendication 1, **caractérisé en ce que** l'accomplissement du flux de données permanent comprend les étapes suivantes
- obtention d'une fréquence d'horloge d'écriture à partir du débit de données d'entrée correspondant à la fréquence de données d'entrée d'un paquet de données en mode rafale en injectant le flux de données d'entrée dans une boucle à verrouillage de phase de récupération de l'horloge (21),
- écriture des données du paquet de données en mode rafale dans un tampon de données (22) en utilisant la fréquence d'horloge d'écriture, et
- lecture d'un flux de données de sortie depuis le tampon de données (22) en utilisant une fréquence d'horloge de lecture conformément à la fréquence de données du domaine d'horloge local, l'écriture et la lecture étant réalisées conformément à un principe premier entré / premier sorti,
les étapes suivantes étant exécutées :
- obtention d'une valeur indicatrice de remplissage à partir d'un niveau de remplissage du tampon de données (22) et
- contrôle de la fréquence d'horloge d'écriture pendant les intervalles de temps entre les paquets de données en mode rafale en influençant la boucle à verrouillage de phase de récupération de l'horloge (21) en fonction de la valeur indicatrice de remplissage d'une manière telle que le niveau de remplissage conserve une valeur moyenne donnée.

5. Procédé selon la revendication 4, **caractérisé en ce que** le flux de données d'entrée est injecté dans un discriminateur de phase de la boucle à verrouillage de phase de récupération de l'horloge (21) et l'influence de la boucle à verrouillage de phase de récupération de l'horloge (21) est réalisée en superposant un signal de commande, de préférence en appliquant une tension, dans la boucle à verrouillage de phase de récupération de l'horloge (21) en fonction de la valeur indicatrice de remplissage.

6. Unité de détection (1) pour détecter les débuts des paquets de données en mode rafale, chacun possédant une fréquence de données dans le domaine temporel de rafale et des intervalles de temps entre deux paquets de données en mode rafale, dans un flux de données d'entrée d'un récepteur en mode rafale optique pour mettre en oeuvre le procédé selon la revendication 1, comprenant
- un dispositif de conversion O/E (3) conçu pour transférer le signal optique du flux de données d'entrée dans un flux de données de signal électronique, de préférence dans lequel il existe un amplificateur limiteur (6) conçu pour égaliser l'amplitude du flux de données de signal électronique au moyen d'un écrêtage,
- des moyens d'accomplissement du flux de données (7) conçus pour accomplir un flux de données permanent en synchronisant le flux de données de signal électronique par récupération du débit de données d'entrée correspondant à la fréquence de données dans le domaine temporel de rafale d'un paquet de donnés en mode rafale particulier et en transférant le débit de données du flux de données de signal électronique dans une fréquence de données d'un domaine d'horloge local, et pour introduire des bits de bourrage dans les intervalles de temps entre les paquets de données en mode rafale du flux de données de signal électronique,
où des moyens d'indication de rafale (9) sont prévus, conçus pour rechercher une chaîne binaire prédéfinie après l'accomplissement du flux de données permanent et pour détecter un début d'un paquet de données en mode rafale particulier, dont l'en-tête de rafale contient la chaîne binaire prédéfinie, en reconnaissant une concordance de modèle numérique de la chaîne binaire prédéfinie dans le flux de données permanent, où des moyens de démultiplexage (8) sont prévus, conçus pour mettre en parallèle le flux de données permanent accompli en subdivisant le flux de données permanent en mots de données postérieurs ayant une longueur prédéfinie avant que la recherche de la chaîne binaire prédéfinie ne soit effectuée par lesdits moyens d'indication de rafale (9).

7. Unité de détection selon la revendication 6, **caractérisée en ce que** les moyens d'indication de rafale (9) sont conçus pour réaliser une procédure de recherche de superposition en recherchant la chaîne binaire prédéfinie postérieurement dans des mots successifs combinés.

8. Unité de détection selon la revendication 6, où les moyens d'accomplissement du flux de données comprennent
- des moyens de récupération de l'horloge comprenant une boucle à verrouillage de phase de récupération d'horloge (21) et conçus pour obtenir une fréquence d'horloge d'écriture à partir du débit de données d'entrée correspondant à la fréquence de données du domaine d'horloge de rafale d'un paquet de données en mode rafale particulier du flux de données d'entrée en injectant le flux de données d'entrée dans la boucle à verrouillage de phase de récupération de l'horloge (21),
- des moyens de tampon de données (22) conçus pour fonctionner conformément à un principe premier entré / premier sorti et recevant le flux de données d'entrée comme entrée de données (23), l'entrée de données (23) étant conçue pour fonctionner en fonction de la fréquence d'horloge d'écriture et la sortie de données (24) étant conçue pour fonctionner conformément à une fréquence d'horloge de lecture du domaine d'horloge local,
où
il existe des moyens de boucle de commande (25), lesquels comprennent
- des moyens d'indication de remplissage (26) conçus pour obtenir une valeur indicatrice de remplissage à partir d'un niveau de remplissage des moyens de tampon de données (22) et
- des moyens d'influence de la boucle à verrouillage de phase de récupération de l'horloge (27) conçus pour contrôler la fréquence d'horloge d'écriture en influençant la boucle à verrouillage de phase de récupération de l'horloge (21) en fonction de la valeur indicatrice de remplissage d'une manière telle que le niveau de remplissage conserve une valeur moyenne donnée pendant les intervalles de temps entre les paquets de données en mode rafale.

9. Unité de détection selon la revendication 8, **caractérisée en ce qu'**il existe un circuit diviseur de fréquence numérique conçu pour obtenir la fréquence d'horloge d'écriture en divisant le débit de données d'entrée de telle sorte que la fréquence d'horloge d'écriture possède un rapport fixe par rapport au débit de données d'entrée, de préférence **en ce qu'**il existe un démultiplexeur (8) conçu pour démultiplexer les données des paquets de données en mode rafale, ce qui a pour résultat que des mots de données sont écrits dans les moyens de tampon de données.

10. Récepteur en mode rafale optique comprenant une unité de détection (1) selon la revendication 6.
